Europäisches Patentamt

European Patent Office

Office européen des brevets

(19)

(11) **EP 1 538 842 A2**

(12) **EUROPEAN PATENT APPLICATION**

(43) Date of publication:
**08.06.2005 Bulletin 2005/23**

(51) Int Cl.$^7$: **H04N 7/26**

(21) Application number: **04106146.6**

(22) Date of filing: **29.11.2004**

(84) Designated Contracting States:
**AT BE BG CH CY CZ DE DK EE ES FI FR GB GR
HU IE IS IT LI LU MC NL PL PT RO SE SI SK TR**
Designated Extension States:
**AL HR LT LV MK YU**

(30) Priority: **02.12.2003 KR 2003086747**

(71) Applicant: **Samsung Electronics Co., Ltd.
Suwon-si, Gyeonggi-do 442-742 (KR)**

(72) Inventor: **Song, Byung-cheol
405-1104 Cheongmyung
Yeongtong-gu Suwon-si Gyeonggi-do (KR)**

(74) Representative: **Geary, Stuart Lloyd et al
Venner Shipley LLP
20 Little Britain
London EC1A 7DH (GB)**

(54) **SAD calculator**

(57)     An apparatus calculates an absolute difference value, which facilitates an efficient structure of an SAD calculating unit having a tree-like structure, and a motion estimation apparatus and a motion picture encoding apparatus that use the apparatus that calculates the absolute difference value. By performing calculations after inputting carry-outs output from a plurality of pseudo absolute difference calculating units to adders in an adder tree, the number of adders necessary for each absolute difference value calculating unit may be reduced.

FIG. 5

Printed by Jouve, 75001 PARIS (FR)

## Description

The present invention relates to an SAD calculator comprising a plurality of circuits, each or which produces a difference signal and a difference sign signal from first and second input signals and an adder tree including a plurality of adders.

Since digital video recorders (DVR) and personal video recorders (PVR) have recently come into widespread use, much research and development of image compression is being conducted. Since conventional DVRs and PVRs compress input images at a fixed resolution regardless of the characteristics of the input images, e.g. temporal complexity, the efficiency of compression is low.

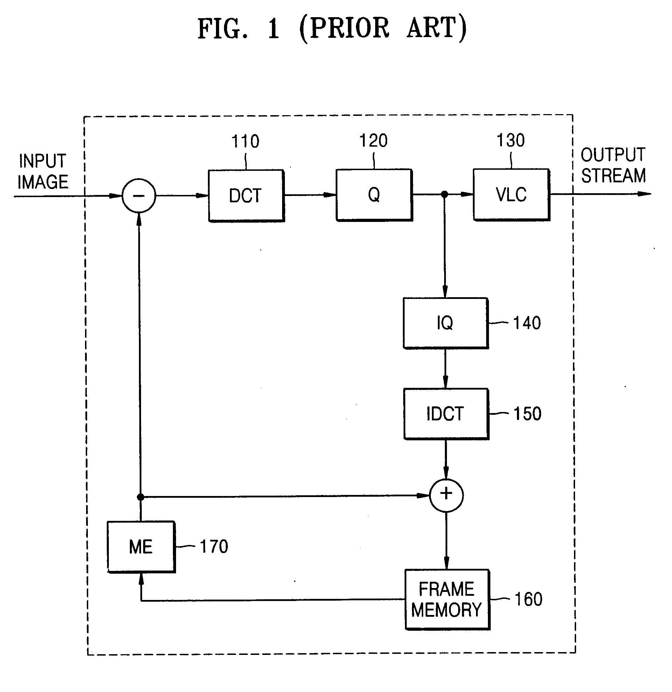

Figure 1 is a block diagram of a conventional motion picture encoder. Input image data is first divided into blocks of 8x8 pixels. A discrete cosine transform (DCT) unit 110 performs DCT on the 8x8 pixel blocks. A quantization unit 120 quantizes the DCT coefficients generated by the DCT unit 120. A variable length coding (VLC) unit 130 performs entropy coding on the quantized DCT coefficients and outputs an entropy-coded data stream.

An inverse quantization (IQ) unit 140 performs inverse quantization on the image data output by the quantization unit 120. An inverse DCT (IDCT) unit 150 performs inverse DCT on the image data output by the IQ unit 140. A frame memory unit 160 stores the image data output by the IDCT unit 150 frame-by-frame. A motion estimation (ME) unit 170 removes temporal correlation using image data from the current input frame and image data from a previous frame which has been stored in the frame memory unit 160.

A core module of block-based motion picture encoder, such as Moving Picture Experts Group (MPEG) 2 and MPEG 4 encoders, is the motion estimator, i.e. the ME unit 170 of Figure 1. The ME unit 170 performs the largest amount of computation and requires a large number of gates when implemented as hardware.

The most frequent calculation performed by such a motion estimator is the calculation of the sum of absolute difference (SAD) of block units. In general, when relatively large images are handled, a plurality of SADs are simultaneously calculated and compared during one period of a clock signal. Thus, an absolute difference calculator and an adder having a tree-like structure have been essential for SAD calculation.

The encoder shown in Figure 1 is described in more detail in US-A-6122321.

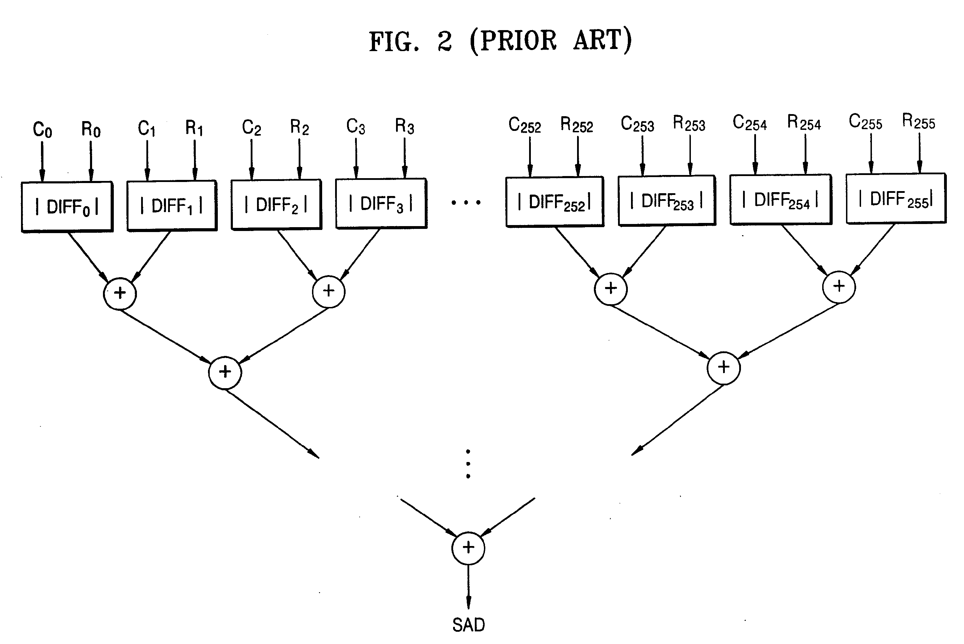

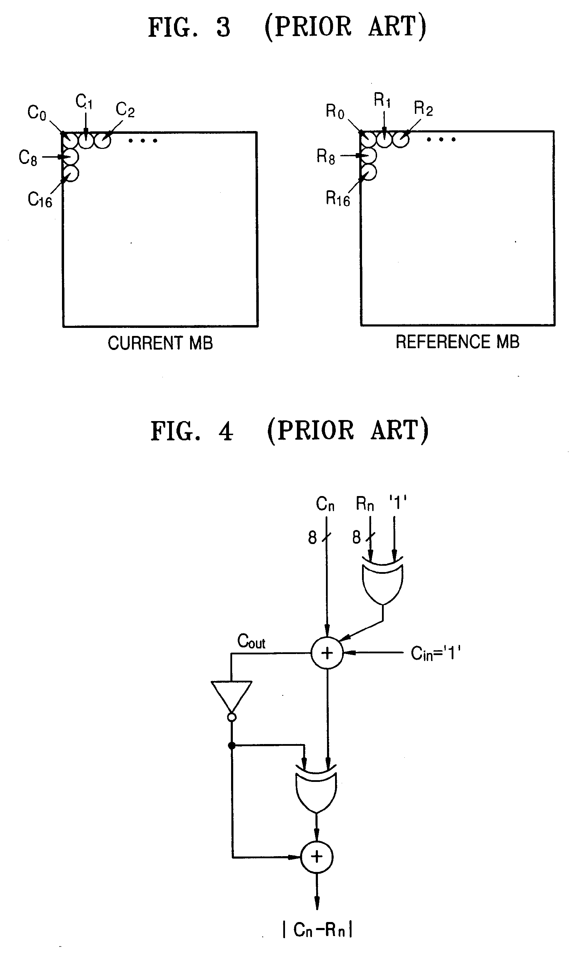

Figure 2 illustrates a conventional SAD calculating unit, which is included in the motion estimation unit 170 of Figure 1, and Figure 3 illustrates two macroblocks (MB) composed of 16x16 pixels used in an SAD calculation by the SAD calculating unit of Figure 2. In Figure 3, the ith pixel of a current MB is denoted by $C_i$ and the ith pixel of a reference MB of a search area having a motion vector with a proper size is denoted by $R_i$.

Absolute difference calculating units shown in Figure 2, i.e. $|DIFF_0|$, $|DIFF_1|$, $|DIFF_2|$ , $|DIFF3|$ , ..., $|DIFF_{255}|$, calculate the differences between absolute values of pixel values $C_i$ of pixels of the current MB, i. e., $C_0$, $C_1$, $C_2$, $C_3$, ..., $C_{255}$, and pixel values $R_i$ of pixels of the reference MB, i.e., $R_0$, $R_1$, $R_2$, $R_3$, ..., $R_{255}$, respectively. Here, $DIFF_i$ denotes $C_i$ - $R_i$.

The SAD calculating unit of Figure 2 calculates the absolute difference between two blocks for each pixel using the absolute difference calculating units and calculates an SAD corresponding to a motion vector using an adder tree. Generally, as shown in Figure 2, there are 256 absolute difference values from which the SAD is calculated using an adder tree.

Figure 4 illustrates the structure of each of the absolute difference calculating units of Figure 2.

An absolute difference calculating unit, as shown in Figure 4, is used when the SAD calculating unit has a tree-like structure as shown in Figure 2 instead of an accumulator structure.

Referring to Figure 4, each of the absolute difference calculating units includes two adders. Thus, to calculate the SAD of a 16x16 MB, the absolute difference calculating units require a total of 256x2, i.e. 512, adders. It should be noted that the prior art absolute difference calculating unit does not actual output difference and difference sign signals. Instead, this signals are added in the absolute difference calculating unit.

As such, since the conventional SAD calculating unit requires at least two adders in each of the absolute difference calculators, a large number of adders are needed and the load of the SAD calculating unit increases.

The present invention provides an apparatus that calculates an absolute difference value, which facilitates an efficient structure of an SAD calculating unit by reducing a number of adders in the SAD calculating unit, and a motion estimation apparatus that performs motion estimation using the apparatus to calculate the absolute difference value.

A SAD calculator, according to the present invention, is characterised in that the difference sign signals are input to carry inputs of adders in the adder tree. Thus, function of the final adders in the prior art absolute difference calculating units is performed within the adder tree.

The adder tree may comprise a plurality of layers having successively fewer adders. Preferably, each adder of the layer having the most adders receives two of said difference signals and one of said difference sign signal as its inputs. More preferably, each adder of the layer having the second highest number of adders receives the outputs of two adders in the layer having the most adders and one of said difference sign signals as its inputs. Yet more preferably, a final layer has a single adder whose inputs are the output of a single adder, constituting the final layer of said layers having successively fewer adders, and one of said difference sign signals.

Additional preferred and optional features are set forth in claims 6 to 35 appended hereto.

Embodiments of the present invention will now be described, by way of example, with reference to Figures 5 to 7 of the accompanying drawings, in which:

Figure 1 is a block diagram of a conventional motion picture encoder;

Figure 2 is a schematic diagram of a conventional SAD calculating unit included in a motion estimation unit 170 of Figure 1;

Figure 3 illustrates two 16x16 macroblocks that may be utilized to execute a SAD calculation;

Figure 4 is a schematic diagram of an absolute difference calculating unit included in the SAD calculating unit of Figure 2;

Figure 5 is a schematic diagram of a first SAD calculating unit according to the present invention;

Figure 6 is a schematic diagram of a second SAD calculating unit according to the present invention; and

Figure 7 is a schematic diagram of a third SAD calculating unit according to the present invention.

A first SAD calculating unit for 2x2 blocks will now be described for convenience of explanation. However, those skilled in the art will understand how to apply the SAD calculating unit to 16x16 blocks.

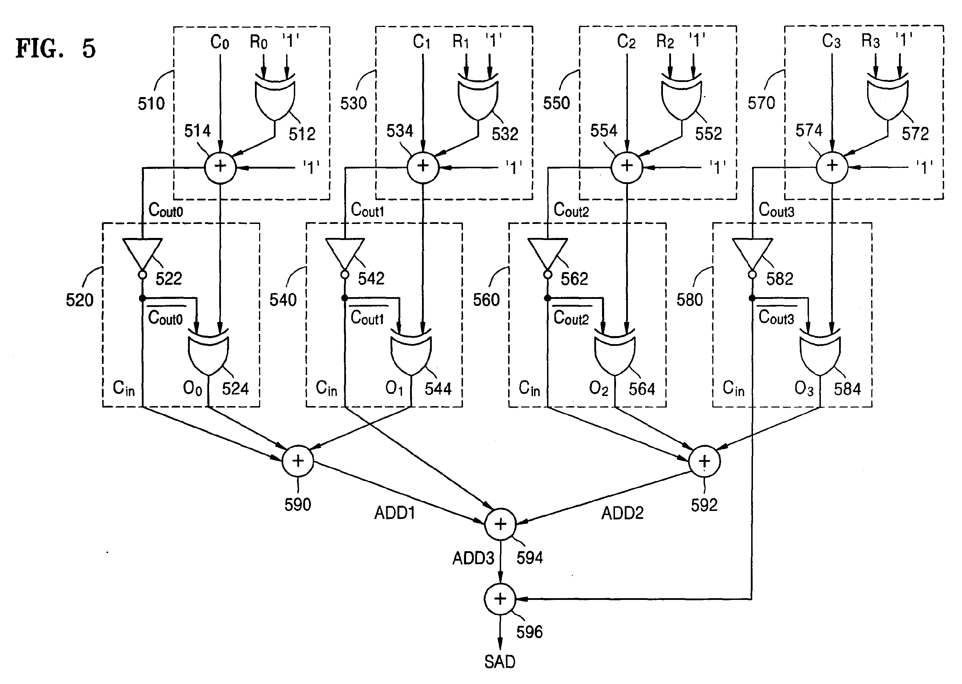

Referring to Figure 5, the first SAD calculating unit includes a first difference value calculating unit 510, a second difference value calculating unit 530, a third difference value calculating unit 550, a fourth difference value calculating unit 570, a first pseudo absolute value calculating unit 520, a second pseudo absolute value calculating unit 540, a third pseudo absolute value calculating unit 560, a fourth pseudo absolute value calculating unit 580, a first adding unit 590, a second adding unit 592, a third adding unit 594, and a fourth adding unit 596.

The first adding unit 590 and the second adding unit 592 are classified as primary adding units, the third adding unit 594 is classified as a secondary adding unit, and the fourth adding unit 596 is classified as a tertiary adding unit.

The first difference value calculating unit 510 and the first pseudo absolute value calculating unit 520 form a first pseudo absolute difference calculating unit, the second difference value calculating unit 530 and the second pseudo absolute value calculating unit 540 form a second pseudo absolute difference calculating unit, the third difference value calculating unit 550 and the third pseudo absolute value calculating unit 560 form a third pseudo absolute difference calculating unit, and the fourth difference value calculating unit 570 and the fourth pseudo absolute value calculating unit 580 form a fourth pseudo absolute difference calculating unit.

The first difference value calculating unit 510 includes an exclusive OR (XOR) gate 512 and an adder 514. A case where pixel values of current and reference blocks each have a resolution of 8 bits will now be described as an example.

The XOR gate 512 receives a 0th pixel value $R_0$ of the reference MB shown in Figure 3 and a '1' and inverts the bits of $R_0$, i.e., $\overline{R}_0$.

The adder 514 receives the $\overline{R}_0$ from the XOR gate 512, a 0th pixel value $C_0$ of the current MB shown in Figure 3, and a carry-in '1' and outputs an output value $Z_0 = C_0 + \overline{R}_0 + 1$ and a carry-out $C_{out0} = [256*(C_0 + \overline{R}_0 + 1)/256]$. In other words the carry-out $C_{out0}$ is a most significant bit (MSB) among the 9 bits calculated by the adder 514 and serves as a sign bit, i.e. a bit that determines the sign (plus or minus).

The first difference value calculating unit 510 outputs the output value $Z_0$ and the carry-out $C_{out0}$.

The first pseudo absolute value calculating unit 520 includes an inverter 522 and an XOR gate 524.

The inverter 522 inverts the carry-out $C_{out0}$ from the first difference value calculating unit 510 into $\overline{C_{out0}}$ and outputs $\overline{C_{out0}}$ to the XOR gate 524 and the first adding unit 590.

The XOR gate 524 receives $\overline{C_{out0}}$ from the inverter 522 and $Z_0 = C_0 + \overline{R}_0 + 1$ from the adder 514 of the first difference value calculating unit 510 and outputs an output value $O_0 = Z_0 \overline{C_{out0}}$.

In this way, the first pseudo absolute value calculating unit 520 outputs $\overline{C_{out0}}$ and $O_0$.

The second difference value calculating unit 530 includes an XOR gate 532 and an adder 534. The XOR gate 532 receives a 1st pixel value $R_1$ of the reference MB shown in FIG 3 and the carry-in '1' and generates $\overline{R}_1$.

The adder 534 receives $\overline{R}_1$, created in the XOR gate 532, a 1st pixel value $C_1$ of the current MB shown in Figure 3 and the carry-in '1', and outputs an output value $Z_1 = C_1 + \overline{R}_1 + 1$ and a carry-out $C_{out1} = [256 * (C_1 + \overline{R}_1 + 1)/256]$

In this way, the second difference value calculating unit 530 outputs the output value $Z_1$ and the carry-out $C_{out1}$.

The second pseudo absolute value calculating unit 540 includes an inverter 542 and an XOR gate 544. The inverter 542 inverts the carry-out $C_{out1}$ from the first difference value calculating unit 530 into $\overline{C_{out1}}$ and outputs $\overline{C_{out1}}$ to the XOR gate 544 and the third adding unit 594.

The XOR gate 544 receives $\overline{C_{out1}}$ from the inverter 542 and $Z_1 = C_1 + \overline{R}_1 + 1$ from the adder 534 of the second difference value calculating unit 530 and outputs an output value $O_1 = Z_1 \overline{C_{out1}}$.

In this way, the second pseudo absolute value calculating unit 540 outputs $\overline{C_{out1}}$ and $O_1$.

The third difference value calculating unit 550 and the fourth difference value calculating unit 570 perform the same functions as the first difference value calculating unit 510 and the second difference value calculating unit 530, and will not be described in detail.

Also, the third pseudo absolute value calculating unit 560 and the fourth pseudo absolute value calculating unit 580 perform the same functions as those of the first pseudo absolute value calculating unit 520 and the second pseudo absolute value calculating unit 540, and will not be described in detail.

The third absolute value calculating unit 560 outputs an output value $\overline{C_{out2}}$ and $O_2$ in the same manner as the first pseudo absolute value calculating unit 560.

Also, the fourth absolute value calculating unit 580 outputs an output value $\overline{C_{out3}}$ and $O_3$ in the same manner as the first pseudo absolute value calculating unit 560. The first adding unit 590 receives the output value $O_0$ from the first pseudo absolute value calculating unit 520 and the output value $O_1$ from the second pseudo absolute value calculating unit 540, uses the carry-out $\overline{C_{out0}}$ of the first pseudo absolute value calculating unit 520 as a carry-in, and calculates and outputs a primary addition value ADD 1.

The second adding unit 592 receives the output value $O_2$ from the third pseudo absolute value calculating unit 560 and the output value $O_3$ from the fourth pseudo absolute value calculating unit 580, uses the carry-out $\overline{C_{out2}}$ of the third pseudo absolute value calculating unit 560 as a carry-in, and calculates and outputs a primary addition value ADD2.

The third adding unit 594 receives the primary addition values ADD1 and ADD2 output from the first adding unit 590 and the second adding unit 592, uses the carry-out $\overline{C_{out1}}$ of the second pseudo absolute value calculating unit 540 as a carry-in, and calculates and outputs a secondary addition value ADD3.

The fourth adding unit 596 receives the secondary addition value ADD3 from the third adding unit 594 and uses the carry-out $\overline{C_{out3}}$ of the fourth pseudo absolute value calculating unit 580 as a carry-in, and calculates and outputs a tertiary addition value.

The tertiary addition value calculated by the fourth adding unit 596 is an SAD of the two $2\times2$ blocks.

In the first embodiment shown in Figure 5, the carry-outs $\overline{C_{out0}}$, $\overline{C_{out1}}$, $\overline{C_{out2}}$, and $\overline{C_{out3}}$ output from the pseudo absolute value calculating units 520, 540, 560, and 580 are carried in the adding units 590, 594, 592, and 596, respectively. However, the carry-outs $\overline{C_{out0}}$, $\overline{C_{out1}}$, $\overline{C_{out2}}$, and $\overline{C_{out3}}$ may be respectively input to a desired adding unit.

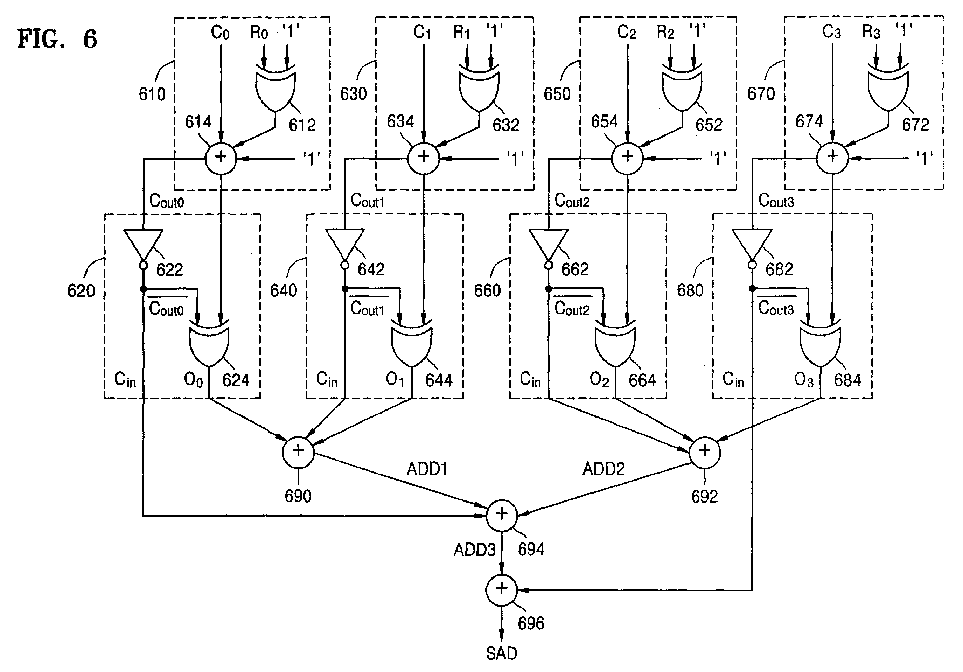

Referring to Figure 6, a second SAD calculating unit, according to the present invention, performs the same functions as the first SAD calculating unit except that a carry-out $\overline{C_{out0}}$ output from a first pseudo absolute value calculating unit 620 is input to a third adding unit 694 as a carry-in, and a carry-out $\overline{C_{out1}}$ output from a second pseudo absolute value calculating unit 640 is input to a first adding unit 690 as a carry-in. Therefore, for brevity, since other functional parts of the SAD calculating unit according to the second embodiment of the present invention correspond to the similarly numbered units of the first embodiment, the other functional parts of the second embodiment will not be described.

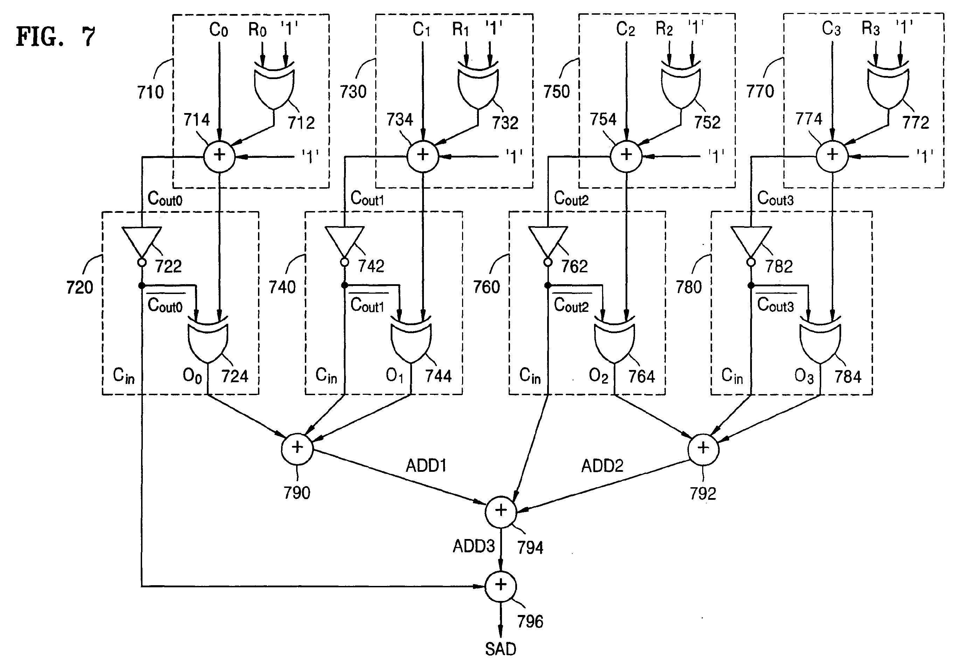

Referring to Figure 7, a third SAD calculating unit, according to the present invention, performs the same functions as the first SAD calculating unit, except that a carry-out $\overline{C_{out0}}$ output from a first pseudo absolute value calculating unit 720 is input to a fourth adding unit 796 as a carry-in, a carry-out $\overline{C_{out1}}$ output from a second pseudo absolute value calculating unit 740 is input to a first adding unit 790 as a carry-in, a carry-out $\overline{C_{out2}}$ output from a third pseudo absolute value calculating unit 760 is input to a third adding unit 794 as a carry-in, and a carry-out $\overline{C_{out3}}$ output from a fourth pseudo absolute value calculating unit 780 is input to a second adding unit 792 as a carry-in. Therefore, for brevity, other functional parts of the SAD calculating unit according to the third embodiment of the present invention will not be described.

As such, in SAD calculating units according to the present invention, each of the carry-outs, generated by conventional absolute value calculating units, are divisively input to adders within an adder tree as carry-ins and used to calculate an SAD.

Therefore, the number of adders in absolute difference value calculating units may be reduced.

For example, when an SAD between two 2x2 blocks is calculated, as shown in Figure 5, 4 carry-outs are output from 4 pseudo absolute value calculating units and three of the 4 carry-outs are input to three adding units 590, 592, and 594 of the adder tree. A result produced by the adder tree and the remaining carry-out are added using an adder, e.g., the fourth adding unit 596. Thus, a final SAD may be obtained. Thus, by connecting one adder to the final adder in the adder tree, the number of adders in absolute value calculating units is reduced by half.

For example, when an SAD between two 2x2 blocks is calculated as shown in Figure 5, the number of adders may be reduced by 4-1 adders.

In the above, calculation of an SAD between two 2x2 blocks is described for convenience of explanation. However, an SAD between two 16x16 blocks may be calculated in the same way.

Also, it is possible to reduce the complexity of the hardware by applying the apparatus that calculates an absolute difference value shown in Figure 5 to the motion estimation unit 170 of the motion picture encoder shown in Figure 1 or any motion picture encoder.

The present invention may also be embodied as a computer readable code on a computer readable recording medium. The computer readable recording medium may be any data storage device that stores data which can be thereafter read by a computer system. Examples of the computer readable recording medium include read-only memory (ROM), random-access memory (RAM), CD-ROMs, magnetic tapes, floppy disks, optical data storage devices, and carrier waves. The computer readable recording medium may also be distributed over network coupled computer systems so that the computer readable code is stored and executed in a distributed fashion.

As described above, by calculating an SAD according to the present invention, the number of adders used for calculation of an SAD may be reduced, and the loads of an apparatus that calculates the SAD, a motion estimation apparatus, and a motion picture encoding apparatus may also be reduced.

**Claims**

1. An SAD calculator comprising a plurality of circuits (510, 520, ..., 570, 580; 610, 620, ..., 670, 680; 710, 720, ..., 770, 780), each or which produces a difference signal ($O_0$, ..., $O_3$) and a difference sign signal ($C_{out0}$,...,$C_{out3}$) from first and second input signals (C, R), and an adder tree including a plurality of adders (590, 592, 594, 596; 690, 692, 694, 696; 790, 792, 794, 796), **characterised in that** the difference sign signals ($C_{out0}$,...,$C_{out3}$) are input to carry inputs of adders (590, 592, 594, 596; 690, 692, 694, 696; 790, 792, 794, 796) in the adder tree.

2. An SAD calculator according to claim 1, wherein the adder tree comprises a plurality of layers having successively fewer adders.

3. An SAD calculator according to claim 2, wherein each adder (590, 592; 690 692; 790, 792) of the layer having the most adders receives two of said difference signals and one of said difference sign signal as its inputs.

4. An SAD calculator according to claim 3, wherein each adder (594; 694; 794) of the layer having the second highest number of adders receives the outputs of two adders in the layer having the most adders and one of said difference sign signals as its inputs.

5. An SAD calculator according to claim 3 or 4, including a final layer having a single adder (596; 696; 796) whose inputs are the output of a single adder (594; 694; 794), constituting the final layer of said layers having successively fewer adders, and one of said difference sign signals.

6. An apparatus that calculates an absolute difference value, the apparatus comprising:

   a plurality of pseudo absolute difference calculating units;
   an adder tree comprising at least one adder to add output values of the plurality of pseudo absolute difference calculating units, each of the at least one adder receiving one of signal determining values generated by the plurality of pseudo absolute difference calculating units as a carry-in; and
an additional adder adding a final value of the adder tree and a sign determining value generated by one of the plurality of pseudo absolute difference calculating units to calculate an absolute difference value.

7. The apparatus of claim 6, wherein each of the sign determining values generated by the plurality of pseudo absolute difference calculating units is input to a different adder.

8. The apparatus of claim 6, wherein each of the pseudo absolute difference calculating units comprises:

   a difference value calculating unit calculating a difference value equal to a difference between two input values; and
   a pseudo absolute value calculating unit including an inverter inverting a carry-out of the difference value calculating unit and an XOR gate XORing an inverted value and a value output from the difference value calculating unit and outputting a result of XORing.

9. The apparatus of claim 8, wherein the carry-out is a most significant bit of the difference value calculated by the difference value calculating unit and the sign determining value is an inversion of the most significant bit.

10. The apparatus of claim 8, wherein the output value of each of the pseudo absolute difference calculating units is the XOR value.

11. A motion estimation apparatus that performs motion estimation using the apparatus that calculates an absolute difference value of claim 6.

12. A motion picture encoding apparatus that performs motion picture encoding using the motion estimation apparatus of claim 11.

13. An apparatus calculating an absolute difference value, the apparatus comprising:

   a plurality of pseudo absolute difference calculating units calculating pseudo absolute differences; and
   a plurality of primary adders, each receiving the pseudo absolute differences calculated by two of the pseudo absolute difference calculating units, using one of sign determining values created by the plurality of pseudo absolute difference calculating units as a carry-in, and calculating an addition value as a sum of the two pseudo absolute differences.

14. The apparatus of claim 13, further comprising a secondary adder receiving the addition values calculated by two of the primary adders, using one of the sign determining values generated by the plurality of pseudo absolute difference calculating units and unused by the primary adder, as a carry-in, and calculating an addition value as the sum of the received two addition values.

15. The apparatus of claim 14, further comprising a third adder that uses the addition value calculated by the secondary adder and one of the sign determining values generated by the plurality of pseudo absolute difference calculating units and unused by the primary adder or the secondary adder, as carry-ins and calculates an addition value as the sum of the received addition value and the received sign determining value.

16. The apparatus of claim 13, wherein each of the pseudo absolute difference calculating units comprises:

a difference value calculating unit calculating a difference value equal to a difference between two input values; and
a pseudo absolute value calculating unit comprising an inverter inverting a carry-out of the difference value calculating unit and an XOR gate XORing an inverted value and a value output from the difference value calculating unit and outputting a result of XORing value.

17. The apparatus of claim 16, wherein the carry-out is a most significant bit of the difference value calculated by the difference value calculating unit and the sign determining value is an inversion of the most significant bit.

18. The apparatus of claim 17, wherein an output value of each of the pseudo absolute difference calculating unit is the XOR value.

19. A motion estimation apparatus that performs motion estimation using the apparatus to calculate an absolute difference value of claim 13.

20. A motion picture encoding apparatus that performs motion picture encoding using the motion estimation apparatus of claim 19.

21. A computer-readable medium having embodied thereon computer-readable code to calculate an absolute difference value, the computer readable code comprising instructions to:

determine a plurality of pseudo absolute differences using a plurality of pseudo absolute difference calculating units;
use an adder tree comprising at least one adder to add output values of the plurality of pseudo absolute difference calculating units, each of the at least one adder receiving one of signal determining values generated by the plurality of pseudo absolute difference calculating units as a carry-in; and
add, using an additional adder unit, a final value of the adder tree and a sign determining value generated by one of the plurality of pseudo absolute difference calculating units to calculate an absolute difference value.

22. The computer-readable medium of claim 21, wherein the computer readable code includes instructions to input, to a different adder unit, each of the sign determining values generated by the plurality of pseudo absolute difference calculating units.

23. The computer-readable medium of claim 21, wherein each of the pseudo absolute difference calculating units comprises computer instructions to:

calculate a difference value equal to a difference between two input values; and
determine a pseudo absolute value, including using an inverter to invert a carry-out of the difference value, using an XOR gate unit to XOR an inverted value and a value output from the difference value, and outputting a result of the XORing.

24. The computer-readable medium of claim 21, wherein the carry-out is a most significant bit of the difference value and the sign determining value is an inversion of a most significant bit.

25. The computer-readable medium of claim 21, wherein an output value of each of the pseudo absolute difference values is an XOR value.

26. A computer-readable medium having embodied thereon computer-readable code to calculate an absolute difference value, the computer readable code comprising instructions to:

utilize a plurality of pseudo absolute difference calculating units to calculate pseudo absolute differences; and
implement a plurality of primary adders, each receiving the pseudo absolute differences calculated by two of the pseudo absolute difference calculating units, using one of sign determining values created by the plurality of pseudo absolute difference calculating units as a carry-in, and calculating an addition value as a sum of the two pseudo absolute differences.

**27.** The computer-readable medium of claim 26, further comprising computer instructions to implement a secondary adder unit to receive the addition values calculated by two of the primary adders, use one of the sign determining values generated by the plurality of pseudo absolute difference calculating units and unused by the primary adder, as a carry-in, and calculate an addition value as a sum of the received two addition values.

**28.** The computer-readable medium of claim 26, further comprising computer instructions to implement a third adder to use the addition value calculated by the secondary adder and one of the sign determining values generated by the plurality of pseudo absolute difference calculating units and unused by the primary adder or the secondary adder, as carry-ins and to calculate an addition value as a sum of the received addition value and the received sign determining value.

**29.** The computer-readable medium of claim 26, wherein each of the pseudo absolute difference calculating units comprises computer instructions to:

use a difference value calculating unit to calculate a difference value equal to a difference between two input values; and
implement a pseudo absolute value calculating unit comprising an inverter inverting a carry-out of the difference value calculating unit and an XOR gate XORing an inverted value and a value output from the difference value calculating unit and outputting a result of the XORing.

**30.** The computer-readable medium of claim 29, wherein the carry-out is a most significant bit of the difference value calculated by the difference value calculating unit and the sign determining value is an inversion of the most significant bit.

**31.** The computer-readable medium of claim 30, wherein an output value of each of the pseudo absolute difference calculating unit is an XOR value.

**32.** The apparatus of claim 5, wherein the adders comprise a first adding unit, a second adding unit, a third adding unit and a fourth adding unit and each of the pseudo absolute difference calculating units comprises:

a difference value calculating unit calculating a difference value equal to a difference between two input values; and
a first pseudo absolute value calculating unit having a carry-out output that is input into the fourth adding unit as a carry-in;
a second pseudo absolute value calculating unit having a carry-out that is input to the first adding unit as a carry-in;
a third pseudo absolute value calculating unit having a carry-out that is input to the third adding unit as a carry-in; and
a fourth pseudo absolute value calculating unit having a carry-out that is input to the second adding unit as a carry-in.

**33.** The apparatus of claim 32, wherein the carry-out is a most significant bit of the difference value calculated by the difference value calculating unit and the sign determining value is an inversion of the most significant bit.

**34.** The computer medium of claim 31, wherein the adders comprise a first adding unit, a second adding unit, a third adding unit and a fourth adding unit and each of the pseudo absolute difference calculating units comprises computer instructions to:

use a difference value calculating unit to calculate a difference value equal to a difference between two input values; and
implement a first pseudo absolute value calculating unit having a carry-out output that is input into the fourth adding unit as a carry-in;
implement a second pseudo absolute value calculating unit having a carry-out that is input to the first adding unit as a carry-in;
implement a third pseudo absolute value calculating unit having a carry-out that is input to the third adding unit as a carry-in; and
implement a fourth pseudo absolute value calculating unit having a carry-out that is input to the second adding unit as a carry-in.

**35.** The computer medium of claim 34, wherein the carry-out is a most significant bit of the difference value calculated by the difference value calculating unit and the sign determining value is an inversion of the most significant bit.

# FIG. 1 (PRIOR ART)

# FIG. 2 (PRIOR ART)

$C_0$  $R_0$  $C_1$  $R_1$  $C_2$  $R_2$  $C_3$  $R_3$  $C_{252}$  $R_{252}$  $C_{253}$  $R_{253}$  $C_{254}$  $R_{254}$  $C_{255}$  $R_{255}$

$|DIFF_0|$  $|DIFF_1|$  $|DIFF_2|$  $|DIFF_3|$  $\cdots$  $|DIFF_{252}|$  $|DIFF_{253}|$  $|DIFF_{254}|$  $|DIFF_{255}|$

SAD

EP 1 538 842 A2

# FIG. 3 (PRIOR ART)

CURRENT MB

REFERENCE MB

# FIG. 4 (PRIOR ART)

$| C_n - R_n |$

FIG. 5

# FIG. 6

EP 1 538 842 A2

12

# FIG. 7

EP 1 538 842 A2